Europäisches Patentamt

European Patent Office

Office européen des brevets

(19)

(11) **EP 0 650 508 B1**

(12) **FASCICULE DE BREVET EUROPEEN**

(45) Date de publication et mention
de la délivrance du brevet:
**07.07.1999 Bulletin 1999/27**

(51) Int Cl.6: **C08L 1/10**, D01F 2/28,
C08J 3/09, C08J 5/18,
B60C 9/00

(21) Numéro de dépôt: **94904557.9**

(22) Date de dépôt: **26.01.1994**

(86) Numéro de dépôt international:
**PCT/CH94/00017**

(87) Numéro de publication internationale:
**WO 94/17136 (04.08.1994 Gazette 1994/18)**

(54) **COMPOSITION, SUSCEPTIBLE DE DONNER DES FIBRES OU DES FILMS, A BASE DE FORMIATE DE CELLULOSE**

ZUSAMMENSETZUNG AUS ZELLULOSEFORMIAT, DIE FASER ODER FILME BILDEN KANN

CELLULOSE FORMATE-BASED COMPOSITION FOR PREPARING FIBRES OR FILMS

(84) Etats contractants désignés:
**AT BE CH DE ES FR GB IT LI LU NL SE**

(30) Priorité: **27.01.1993 FR 9301121**

(43) Date de publication de la demande:
**03.05.1995 Bulletin 1995/18**

(73) Titulaire: **MICHELIN RECHERCHE ET
TECHNIQUE S.A.
CH-1763 Granges-Paccot (CH)**

(72) Inventeurs:
- **MERALDI, Jean-Paul
  CH-8049 Zürich (CH)**
- **CIZEK, Vlastimil
  CH-8052 Zürich (CH)**
- **HUSTON, Rima
  CH-8050 Zürich (CH)**

(74) Mandataire: **Hiebel, Robert
Michelin & Cie,
Service SGD/LG/PI Ladoux
63040 Clermont-Ferrand Cedex 01 (FR)**

(56) Documents cités:
EP-A- 0 220 642          WO-A-85/05115
WO-A-91/16357

- ANGEWANDTE MAKROMOLEKULARE CHEMIE.
  vol. 198, no. 3451 , 1992 , BASEL CH pages 155
  - 164 M. SCHNABELRAUCH ET AL. 'Readily
  hydrolyzable cellulose esters as intermediates
  for the regioselective derivatization of cellulose'
- JOURNAL OF POLYMER SCIENCE, POLYMER
  LETTERS EDITION vol. 24, no. 10 , 1986 , NEW
  YORK US pages 495 - 501 T. FUJIMOTO ET AL.
  'Reaction of cellulose with formic acid and
  stability of cellulose formate'

## Description

L'invention concerne les compositions pour obtenir des fibres ou des films cellulosiques ainsi que les procédés pour obtenir ces fibres et ces films, et les fibres cellulosiques elles-mêmes.

La réalisation de viscose et de rayonne est connue depuis très longtemps. Le procédé pour obtenir ces fibres est un procédé au mouillé qui a des caractéristiques importantes de pollution.

Divers procédés ont été décrits pour tenter de remédier à ces inconvénients et nous les résumons ci-dessous.

On a proposé de dissoudre directement la cellulose dans des amines tertiaires N-oxydes, notamment le N-oxyde de N-méthylmorpholine, comme décrit par exemple dans US-A-4 416 698, DD 298 653. Ces solvants ont la caractéristique de se décomposer facilement en donnant des peroxydes qui peuvent conduire à des explosions et provoquer la dégradation de la cellulose.

Il est connu de préparer des fibres de cellulose par dissolution de cellulose dans un mélange de N,N-diméthylacétamide (DMAC) et de LiCl comme décrit par exemple dans US-A-4 302 252 et dans EP-A-178 293, mais ce procédé nécessite une activation préalable de la cellulose et ne permet pas d'obtenir des fibres ayant des caractéristiques mécaniques aussi élévées que celles de la rayonne.

Les demandes de brevets japonais JP-A-60-199 912 et JP-A-60-209 006 décrivent la réalisation de fibres en utilisant des solutions de cellulose dans des solvants organiques contenant des composés halogénés de tétra-alkylammonium. Ce procédé ne permet pas de dépasser une concentration en poids de 6 % en cellulose dissoute, ce qui limite fortement les propriétés mécaniques des fibres obtenues, notamment pour les applications techniques.

La demande WO-A-85/05115 décrit la réalisation de fibres en formiate de cellulose à partir de solutions anisotropes de formiate de cellulose dans de l'acide formique et de l'acide phosphorique, ces fibres pouvant être régénérées. Le procédé pour l'obtention de ces fibres n'est pas polluant, et les fibres en cellulose régénérée ainsi obtenues se caractérisent par des propriétés mécaniques très élevées, en particulier le module initial et la ténacité ont des valeurs importantes. Cependant, les fibres ainsi obtenues ont une structure très ordonnée qui reflète le caractère anisotrope des solutions de départ et qui les rend impropres à une utilisation textile.

L'invention a pour but de remédier aux inconvénients précités ou de limiter ces inconvénients, en proposant une composition susceptible de donner des fibres ou des films, un procédé pour obtenir des fibres ou des films en cellulose régénérée, et une fibre en cellulose régénérée.

La composition conforme à l'invention, susceptible de donner des fibres ou des films, à base de formiate de cellulose, est caractérisée par les points suivants :

a) la composition est une solution ;

b) la concentration en formiate de cellulose dans la composition est au moins égale à 8 % en poids ;

c) le degré de substitution de la cellulose en groupes formiate est supérieur à 20 % ;

d) la composition comporte comme solvant un ou plusieurs composés choisis dans le groupe constitué par les alkylsulfoxydes, les lactames, les amides acycliques, les dérivés cycliques de l'urée ;

e) le degré de polymérisation (DP) de la cellulose, dans le formiate de cellulose, est au moins égal à 500.

Ces composés peuvent être substitués, ou non substitués, la substitution, si elle existe, étant effectuée de préférence sur un atome d'azote et le groupe substituant étant de préférence le méthyle.

Le procédé conforme à l'invention pour obtenir une fibre ou un film en cellulose régénérée comporte les points suivants :

a) on transforme la composition précédemment définie en un extrudat liquide ayant la forme d'une fibre ou d'un film, à une température telle que la solution est isotrope si elle est au repos ;

b) on coagule ledit extrudat liquide ;

c) on régénère la cellulose de la fibre ou du film ainsi obtenus ;

d) on lave et on sèche la fibre ou le film ainsi régénérés.

La fibre en cellulose régénérée conforme à l'invention est caractérisée par les points suivants :

a) le degré de substitution de la cellulose en groupes formiate est inférieur à 3 % ;

b) la fibre est constituée de filaments qui ont chacun, en section transversale, une morphologie pratiquement continue de la périphérie jusqu'au coeur ;

c) les caractéristiques mécaniques de la fibre conditionnée sont les suivantes :

$T \geq 10$ cN/tex ; $M_i \geq 500$ cN/tex ; $A_R > 5$ % ;
T étant la ténacité, $M_i$ étant le module initial, et $A_R$ étant l'allongement à la rupture.

La composition peut comporter un ou plusieurs composés choisis dans le groupe constitué par les halogénures de métaux alcalins, les halogénures de métaux alcalino-terreux, les halogénures de tétra-alkylammonium, notamment le chlorure de calcium et/ou le chlorure de lithium.

L'invention concerne également l'utilisation des compositions conformes à l'invention pour le filage de fibres ou de films

L'invention concerne également les fibres et les films obtenus avec le procédé conforme à l'invention, ainsi que les assemblages comportant au moins une fibre et/ou un film conformes à l'invention.

Les fibres, les films et les assemblages conformes à l'invention peuvent être utilisés notamment dans l'emballage, dans l'industrie textile, ou comme renforts, par exemple pour renforcer des articles en caoutchouc ou en matières plastiques, en particulier des courroies, des tuyaux, des enveloppes de pneumatiques, l'invention concernant également ces articles.

L'invention sera aisément comprise à l'aide des exemples non limitatifs qui suivent.

I - Mesures et tests utilisés

1. Mesures effectuées sur la cellulose de départ et sur la composition de filage

1.1. Degré de polymérisation (DP) de la cellulose
On détermine la viscosité inhérente IV de la matière cellulosique selon la norme suisse SNV 195 598 de 1970, mais à différentes concentrations qui varient entre 0,5 et 0,05 g/dl. La viscosité inhérente est définie par l'équation :

$$IV = \frac{1}{C} \, Ln \, \frac{t}{t_o}$$

dans laquelle C représente la concentration en matière cellulosique sèche, "t" représente la durée d'écoulement de la solution diluée de polymère, $t_o$ représente la durée d'écoulement du solvant pur, dans un viscosimètre type Ubbelohde, et Ln représente le logarithme népérien, les mesures étant réalisées à 20°C.
La viscosité intrinsèque $[\eta]$ est donnée par extrapolation à concentration nulle de la viscosité inhérente IV.
La masse moléculaire moyenne en poids $\overline{M}_w$ est donnée par la relation de Mark-Houwink :

$$[\eta] = K\overline{M}_w^{\alpha}$$

où les constantes K et $\alpha$ sont respectivement : $K = 5,31 \times 10^{-4}$ ; $\alpha = 0,78$, ces constantes correspondant au système de solvant utilisé pour la détermination de la viscosité inhérente.
Ces valeurs sont données par L. Valtasaari, dans le document Tappi 48, 627 (1965).
Le degré de polymérisation (DP) est défini par la formule :

$$DP = \frac{\overline{M}_w}{162}$$

162 étant la masse moléculaire du motif élémentaire de la cellulose.
Le DP de la cellulose de départ est noté $DP_c$ dans les exemples et tableaux qui suivent.

**1.2. <u>Degré de substitution (DS) de la cellulose en groupes formiate (degré de formylation), dans la composition</u>**

On coagule dans de l'eau la composition de filage dans un appareil à disperser. Après filtration, lavage à l'eau et ensuite à l'acétone, on obtient une poudre qui est séchée à l'air à 50°C pendant au moins 30 minutes.

On pèse avec précision 400 mg de formiate de cellulose ainsi obtenu, dans un erlenmeyer de 100 ml, on ajoute 50 ml d'eau et 4 ml de soude normale (NaOH 1N). On chauffe à 100°C à reflux pendant 1/2 heure sous azote, on régénère ainsi la cellulose du formiate. Après refroidissement, la soude en excès est titrée en retour avec une solution d'acide chlorhydrique décinormale (HCl 0,1 N).

Le DS total déterminé par cette méthode donne le pourcentage total du nombre de fonctions alcool de la cellulose qui ont été estérifiées, c'est-à-dire que DS = 100 % lorsque les trois fonctions alcool du motif de la cellulose sont estérifiées, et DS = 20 % lorsque 0,6 fonction alcool est estérifiée.

Le DS ainsi déterminé donne donc directement le pourcentage de fonctions alcool de la cellulose qui ont été transformées en groupes formiate.

Le DS de la cellulose en groupes formiate (degré de formylation), dans la composition, est noté $DS_f$ dans les exemples et tableaux qui suivent.

**1.3. <u>Degré de polymérisation (DP) de la cellulose sous forme de formiate, dans la composition.</u>**

On isole le dérivé cellulosique et on régénère ensuite la cellulose de ce dérivé en traitant ce dérivé à reflux avec de la soude normale. On lave à l'eau la cellulose obtenue, on la sèche et on mesure le DP comme décrit précédemment au § 1.1.

Le DP de la cellulose sous forme de formiate, dans la composition, est noté $DP_f$ dans les exemples et tableaux qui suivent.

**1.4. <u>Isotropie des solutions</u>**

Une goutte de la solution à étudier est placée entre polariseur et analyseur linéaires croisés d'un microscope optique de polarisation, puis observée au repos, c'est-à-dire en l'absence de contrainte dynamique, à la température de filage de cette solution.

**2 - <u>Mesures effectuées sur les fibres</u>**

**2.1. <u>Propriétés mécaniques des fibres</u>**

Par "conditionnement", on entend le traitement des fibres selon la norme d'Allemagne Fédérale DIN 53802-20/65 de juillet 1979.

Le titre des fibres est déterminé selon la norme d'Allemagne Fédérale DIN 53830 de juin 1965, les fibres étant conditionnées au préalable. La mesure est opérée sur au moins trois échantillons, chacun correspondant à une longueur de 50 m, par pesée de cette longueur de fibre. Le titre est donné en tex (masse en gramme de 1000 mètres de fibre).

Les propriétés mécaniques des fibres (ténacité, module initial et allongement à la rupture) sont mesurées à l'aide d'une machine de traction ZWICK GmbH & Co (RFA) de type 1435 ou de type 1445, correspondant aux normes d'Allemagne Fédérale DIN 51220 d'octobre 1976, 51221 d'août 1976 et 51223 de décembre 1977, selon le mode opératoire décrit dans la norme d'Allemagne Fédérale DIN 53834 de janvier 1979. Les fibres obtenues après filage (filés) reçoivent pour la mesure une torsion de protection préalable et elles subissent une traction sur une longueur initiale de 400 mm. Tous les résultats sont obtenus avec une moyenne de 10 mesures.

La ténacité (T) et le module initial ($M_i$) sont indiqués en cN par tex (centinewton par tex). L'allongement à la rupture ($A_R$) est indiqué en pourcentage. Le module initial ($M_i$) est défini comme la pente de la partie linéaire de la courbe force - allongement, qui intervient juste après la prétension standard de 0,5 cN/tex. T, $M_i$ et $A_R$ sont mesurés sur des fibres conditionnées.

**2.2. <u>Caractéristiques chimiques des fibres régénérées</u>**

Le DP de la cellulose est mesuré comme indiqué au § 1.1.

La détermination du DS des fibres régénérées est effectuée de la façon suivante :

Environ 400 mg de fibre sont coupés en morceaux de 2-3 cm et introduits dans un erlenmeyer de 100 ml contenant 50 ml d'eau. On ajoute 1 ml de soude normale (NaOH 1N). La matière est mélangée à température ambiante, pendant 15 minutes. La soude en excès est titrée avec une solution d'acide chlorhydrique décinormale (HCl 0,1 N). La valeur de DS, calculée comme au § 1.2., donne le pourcentage de fonctions alcool de la cellulose qui ont été transformées en groupes formiate.

**2.3. <u>Morphologie des fibres régénérées</u>**

L'examen se fait avec un microscope optique de polarisation sur des filaments élémentaires intacts, puis ayant subi une abrasion. On observe ces filaments qui sont disposés entre polariseur et analyseur linéaires croisés, l'axe des filaments étant parallèle aux surfaces planes du polariseur et de l'analyseur.

II - Réalisation des fibres

1 - Réalisation du formiate de cellulose

Le formiate de cellulose est préparé par exemple conformément à la demande WO-A-85/05115 précitée à partir de cellulose, d'acide formique et d'acide orthophosphorique.

Pour réaliser du formiate de cellulose on utilise à titre d'exemple le mode opératoire suivant. On introduit dans un malaxeur à double enveloppe, comportant des bras en Z, de la poudre de cellulose (dont l'humidité est en équilibre avec l'humidité ambiante de l'air). On ajoute ensuite un mélange d'acide orthophosphorique et d'acide formique. Les trois composants se trouvent par exemple dans les proportions : cellulose 16 %, acide orthophosphorique (cristallin à 99 %) 46 %, acide formique 38 % (% en poids). Le tout est mélangé pendant 1 h, la température du mélange étant maintenue entre 10 et 15°C. Dans ces circonstances, par exemple, le DP subit une diminution de 30 % en moyenne. La variation de la proportion relative d'acide formique permet de faire varier le degré de substitution.

La solution de formiate de cellulose ainsi obtenue est extrudée hors du mélangeur comportant des bras en Z par une vis d'extrusion sous forme de joncs liquides d'environ 0,5 mm de diamètre que l'on plonge dans l'eau à température ambiante. On obtient ainsi, par coagulation et lavage neutre, des joncs de formiate de cellulose que l'on sèche avec de l'air chaud ayant une température d'environ 120°C. Il va de soi que cette méthode n'est citée qu'à titre d'exemple. La réalisation de films minces par exemple en extrudant la solution sur les cylindres d'une calandre est tout à fait possible.

2 - Réalisation des compositions de filage

Les compositions de formiate de cellulose conformes à l'invention sont obtenues en dissolvant ces joncs de formiate de cellulose sec dans les solvants étudiés. On utilise à titre d'exemple le mode opératoire suivant. Les joncs sont mis à imprégner dans le solvant à température ambiante pendant une période de temps variable pouvant aller de 1 h à plusieurs heures. La présolution est alors introduite dans un mélangeur à double enveloppe comportant des bras en Z. Le tout est malaxé pendant environ 15 h, la température de la solution étant maintenue à 20 - 25°C. Des additifs éventuels (sels minéraux ou organiques) peuvent être ajoutés pendant le malaxage. Pendant la dernière heure de malaxage, un vide de 8 mbar environ est appliqué pour dégazer la solution. La solution est alors extrudée à l'aide d'une vis d'extrusion dans un réservoir muni d'un piston. Le vide de 8 mbar environ est maintenu pendant l'étape d'extrusion. Une variante plus rapide consiste à maintenir la solution dans le malaxeur à 75°C pendant 2 h et à procéder ensuite à l'étape de dégazage pendant 1 h à 20°C.

3 - Filage de la composition

3.1. Filage selon la technique dite "avec couche non coagulante de fluide" (dry jet wet).

La solution, qui est à température ambiante, est extrudée du réservoir de stockage par un piston dans une pompe d'extraction, qui à son tour pousse la solution successivement à travers un filtre fin à cartouche et le bloc de filage jusque dans la pompe de filature. A partir de la pompe de filature, on extrude la solution à travers une filière, précédée d'un filtre, la filière comportant 30, 50 ou 250 orifices ayant chacun 65 ou 50 micromètres de diamètre. L'extrudat sortant de la filière est donc constitué de 30, 50 ou 250 veines liquides élémentaires. La veine liquide qui jaillit de chaque orifice acquiert une vitesse de sortie de filière notée $V_F$ dans les tableaux 1 et 3 qui suivent. Au cours du cheminement du réservoir à la filière, la solution est progressivement amenée à la température de filage ($T_F$) voulue. La filière est située à quelques mm au-dessus du bain de coagulation. Avant d'entrer dans le bain de coagulation, chaque veine qui sort de la filière est étirée dans une couche non coagulante de fluide, qui est par exemple une couche d'air. Dans le bain de coagulation, la fibre en dérivé cellulosique se forme. Le bain de coagulation est par exemple à base d'eau dans une gamme de température ($T_c$) qui peut varier en fonction du type de fibre recherché. En sortie du bain de coagulation, la fibre ainsi formée passe dans une succession de bains de lavage à base d'eau pour être finalement reprise sur un dispositif d'entraînement avec une vitesse d'appel notée $V_{a1}$ dans les tableaux 1 et 3. La température ($T_1$) des bains de lavage est généralement supérieure à celle du bain de coagulation, mais pas obligatoirement. Lors de l'étape de lavage, la fibre passe sur un deuxième dispositif d'entraînement avec une vitesse d'appel notée $V_{a2}$ dans les tableaux 1 et 3. Le rapport ($V_{a2}/V_F$) entre la dernière vitesse d'appel et la vitesse de sortie de filière définit le facteur d'étirage au filage total, noté FEF dans les tableaux 1 et 3. Lorsque $V_{a2}$ et $V_{a1}$ ont des valeurs différentes, on peut avoir entre les deux dispositifs d'entraînement, soit un étirage de la fibre (si $V_{a2} > V_{a1}$), soit une relaxation de la fibre (si $V_{a2} < V_{a1}$). L'utilisation de deux dispositifs d'entraînement n'est pas limitative, le procédé conforme à l'invention pouvant utiliser un seul dispositif d'entraînement, ou plus de deux dispositifs d'entraînement.

### 3.2. Filage au mouillé

Les conditions de filage sont identiques aux conditions précédentes, avec la différence que la filière est au contact du bain de coagulation, c'est-à-dire qu'il n'y a pas de couche non coagulante de fluide.

## 4 - Régénération de la cellulose

### 4.1. Régénération après coagulation

En sortie du dernier dispositif d'entraînement, la fibre de formiate de cellulose mouillée passe pendant quelques secondes dans un bain de régénération généralement à température ambiante, en ligne avec l'étape de filage, constitué par exemple d'une solution aqueuse de soude, généralement de 2 à 5 % en poids, mais qui peut varier selon les besoins, pour régénérer la cellulose. La fibre régénérée est ensuite lavée à l'eau, puis séchée sur des rouleaux chauffants avant d'être bobinée.

### 4.2. Régénération dans le bain de coagulation

On opère comme dans le paragraphe précédent avec la différence que le bain de coagulation comporte de la soude, de telle sorte qu'il sert à la fois pour la coagulation et pour la régénération de la fibre.

## 5 - Exemples

On réalise au total 29 essais de préparation de fibres en suivant les étapes 1 à 4 précédentes. Les conditions de ces essais sont données dans les tableaux 1 et 3, et les caractéristiques des fibres obtenues (filés contenant chacun 30, 50 ou 250 filaments élémentaires) sont données dans les tableaux 2 et 4. Tous ces essais sont conformes à l'invention.

Les tableaux 1 et 2 concernent les 25 essais effectués selon la technique dry jet wet, et les tableaux 3 et 4 concernent les 4 essais effectués selon la technique au mouillé.

Tous les pourcentages des tableaux 1 et 3 concernant la formulation des compositions (solvants, additifs, formiate) sont des pourcentages en poids, par rapport au poids total de la composition.

Les abréviations utilisées pour les solvants et pour les additifs sont les suivantes :

NMP : N-méthylpyrrolidone ;
DMSO : diméthylsulfoxyde ;
DMF : N,N-diméthylformamide ;
TBAB : bromure de tétrabutylammonium ;
EG : éthylèneglycol.

Les autres abréviations ainsi que les unités utilisées dans les tableaux 1 et 3 d'une part, 2 et 4 d'autre part, sont les suivantes :

$DP_c$ :  DP de la cellulose de départ ;

$DP_f$ :  DP de la cellulose sous forme de formiate, dans la composition ;

$DS_f$ :  DS de la cellulose en groupes formiate (ou degré de formylation), dans la composition (en %) ;

$T_F$ :  Température de filage (en °C) ;

$V_F$ :  Vitesse de sortie de filière (en m/min) ;

$V_{a1}$ :  Première vitesse d'appel (en m/min) ;

$V_{a2}$ :  Deuxième vitesse d'appel (en m/min) ;

FEF :  Facteur d'étirage au filage total ;

$T_1$ : Température de lavage (en °C) ;

$T_i$ : Titre (en tex) ;

$T$ : Ténacité (en cN/tex) ;

$A_R$ : Allongement à la rupture (en %) ;

$M_i$ : Module inital (en cN/tex).

Les conditions particulières de ces essais, autres que celles décrites précédemment, sont les suivantes :

a) Technique du dry jet wet (tableau 1) :

- la filière comprend 250 trous de diamètre 65 μm pour les essais 1 à 11 d'une part, 13 à 23 d'autre part, 250 trous de diamètre 50 μm pour l'essai 12, 50 trous de diamètre 65 μm pour l'essai 24, et 30 trous de diamètre 65 μm pour l'essai 25 ;

- la couche d'air non coagulante a une épaisseur comprise entre 5 et 6 mm ;

- le bain de coagulation est constitué d'eau contenant environ 12 % de l'ensemble solvant et additif, dans les mêmes proportions relatives que pour les compositions de filage, sauf pour l'essai 10 où l'eau contient 10 % de NMP et 8,6 % de CaCl2, et pour l'essai 14 où l'eau contient 24 % de NMP et moins de 0,5 % de CaCl2 ;

- la régénération est réalisée à l'aide d'une solution aqueuse de soude contenant 5 % de NaOH pour les essais 1 à 23, 2 % de NaOH pour les essais 24 et 25 ;

- les fibres sont séchées, après régénération et lavage, à une température allant de 105 à 120 °C ;

- les fibres ainsi obtenues sont donc des filés constitués de 250 filaments pour les essais 1 à 23, 50 filaments pour l'essai 24, et 30 filaments pour l'essai 25 ;

b) Technique au mouillé (Tableau 3) :

- la filière comprend 250 trous de diamètre 50 μm pour l'essai 1, 50 trous de diamètre 65 μm pour l'essai 2, et 50 trous de diamètre 50 μm pour les essais 3 et 4 ;

- le bain de coagulation est constitué d'eau contenant environ 12 % de solvant(s), dans les mêmes proportions relatives que pour les compositions de filage s'il s'agit d'un mélange de solvants (essai 2) ;

- la régénération est réalisée à l'aide d'une solution aqueuse de soude contenant 5 % de NaOH pour l'essai 1, 2 % de NaOH pour les essais 2 et 3 ; dans le cas de l'essai 4, on a utilisé 2 % de NaOH directement dans le bain de coagulation ;

- les fibres sont séchées, après régénération et lavage, à une température de 120 °C pour l'essai 1, 105 °C pour l'essai 2, et 90 °C pour les essais 3 et 4 ;

- les fibres ainsi obtenues sont donc des filés constitués de 250 filaments pour l'essai 1, 50 filaments pour les essais 2 à 4.

Pour tous les exemples considérés, les fibres obtenues (tableaux 2 et 4) présentent un degré de substitution en groupes formiate qui est inférieur à 2 %, et un degré de polymérisation qui est sensiblement équivalent au degré de polymérisation déterminé pour les compositions de filage ($DP_f$), ceci signifiant que le procédé n'entraîne pas de diminution notable du DP de la cellulose.

Tableau 1: conditions des essais (technique du dry jet wet)

| | | compositions de filage | | | | | filage | | | | | | |
|---|---|---|---|---|---|---|---|---|---|---|---|---|---|
| essai No | $DP_c$ | $DP_f$ | $DS_f$ (%) | solvant type/% | additif type/% | formiate de cell. (%) | $T_F$ (°C) | $V_F$ (m/min) | $T_c$ (°C) | $V_{a1}$ (m/min) | $V_{a2}$ (m/min) | FEF total | $T_1$ (°C) |
| 1 | 1400 | 920 | 42 | NMP/70 | $CaCl_2/8$ | 22 | 69 | 41 | 4 | 124 | 135 | 3,3 | 13 |
| 2 | 1400 | 930 | 38 | NMP/76 | $CaCl_2/7$ | 17 | 73 | 48 | 6 | 128 | 130 | 2,7 | 50 |
| 3 | 1400 | 930 | 38 | NMP/76 | $CaCl_2/7$ | 17 | 53 | 52 | 48 | 128 | 130 | 2,5 | 50 |
| 4 | 1400 | 910 | 36 | NMP/78 | $CaCl_2/8$ | 14 | 51 | 41 | 8 | 82 | 82 | 2,0 | 11 |
| 5 | 1200 | 870 | 35 | NMP/79 | $CaCl_2/9$ | 12 | 60 | 59 | 8 | 130 | 130 | 2,2 | 50 |
| 6 | 500 | 480 | 42 | NMP/63 | $CaCl_2/7$ | 30 | 81 | 19 | 2 | 82 | 82 | 4,3 | 11 |
| 7 | 1400 | 850 | 36 | NMP/65 | $CaCl_2/10$ | 25 | 99 | 17 | 3 | 82 | 82 | 4,8 | 50 |
| 8 | 1400 | 960 | 40 | NMP/69 | $CaCl_2/11$ | 20 | 115 | 55 | 4 | 204 | 204 | 3,7 | 10 |
| 9 | 1400 | 610 | 37 | NMP/66 | $CaCl_2/12$ | 22 | 84 | 35 | 3 | 200 | 200 | 5,7 | 10 |
| 10 | 1400 | 610 | 37 | NMP/66 | $CaCl_2/12$ | 22 | 85 | 40 | -4 | 200 | 200 | 5,0 | 10 |
| 11 | 1400 | 690 | 35 | NMP/65 | $CaCl_2/12$ | 23 | 94 | 28 | 2 | 160 | 160 | 5,7 | 10 |
| 12 | 1200 | 820 | 35 | NMP/68 | $CaCl_2/11$ | 21 | 91 | 53 | 2 | 159 | 159 | 3,0 | 50 |
| 13 | 1200 | 850 | 37 | NMP/67 | LiCl /8 | 25 | 104 | 28 | 2 | 120 | 120 | 4,3 | 50 |
| 14 | 1200 | 810 | 40 | NMP/68 | $CaCl_2/6,6$ LiCl /2,4 | 23 | 103 | 36 | 0 | 180 | 180 | 5,0 | 50 |
| 15 | 1200 | 840 | 37 | NMP/64 DMSO/12 | -- | 24 | 49 | 26 | 0 | 140 | 140 | 5,4 | 50 |

EP 0 650 508 B1

Tableau 1: (suite)

| essai No | $DP_C$ | $DP_f$ | $DS_f$ (%) | solvant type/% | additif type/% | formiate de cell. (%) | $T_F$ (°C) | $V_F$ (m/min) | $T_C$ (°C) | $V_{a1}$ (m/min) | $V_{a2}$ (m/min) | FEF total | $T_1$ (°C) |
|---|---|---|---|---|---|---|---|---|---|---|---|---|---|
| | | | | compositions de filage | | | filage | | | | | | |
| 16 | 1200 | 780 | 41 | NMP/73 | -- | 27 | 44 | 16 | 0 | 80 | 80 | 5,0 | 50 |
| 17 | 1400 | 1110 | 44 | DMSO/76 | -- | 24 | 58 | 28 | 14 | 140 | 140 | 5,0 | 50 |
| 18 | 1400 | 1110 | 42 | NMP/38 DMSO/38 | -- | 24 | 58 | 34 | 0 | 150 | 150 | 4,4 | 50 |
| 19 | 1400 | 1100 | 42 | NMP/45,2 DMSO/45,2 | -- | 9,6 | 74 | 123 | 0 | 160 | 160 | 1,3 | 50 |
| 20 | 1400 | 1080 | 42 | DMF/68,4 | LiCl/7,6 | 24 | 95 | 37 | 0 | 160 | 170 | 4,6 | 10 |
| 21 | 1400 | 1150 | 42 | DMF/80,8 | LiCl/9,6 | 9,6 | 43 | 111 | 1 | 100 | 100 | 0,9 | 10 |
| 22 | 1400 | 970 | 31 | NMP/80,8 | LiCl/9,6 | 9,6 | 64 | 119 | 2 | 190 | 190 | 1,6 | 10 |
| 23 | 1400 | 1070 | 43 | DMSO/66 | TBAB/10 | 24 | 57 | 31 | 5 | 201 | 201 | 6,5 | 50 |
| 24 | 1200 | 850 | 36 | NMP/83,4 | $CaCl_2$/2 $H_2O$ /6 | 8,6 | 0 | 40 | 23 | 40 | 40 | 1,0 | 10 |
| 25 | 550 | 500 | 40 | NMP/75,2 | $CaCl_2$/4 EG /6 | 14,8 | 49 | 36 | 21 | 40 | 40 | 1,1 | 20 |

EP 0 650 508 B1

Tableau 2:

| caractéristiques des fibres obtenues dans les conditions du tableau 1 | | | | |
|---|---|---|---|---|
| essai No | $T_i$ (tex) | T (cN/tex) | $A_R$ (%) | $M_i$ (cN/tex) |
| 1 | 48,0 | 36,5 | 5,6 | 1550 |
| 2 | 45,7 | 37,5 | 7,2 | 1475 |
| 3 | 52,2 | 28,4 | 6,9 | 1386 |
| 4 | 51,1 | 30,6 | 8,7 | 1428 |
| 5 | 38,8 | 23,6 | 5,8 | 1304 |
| 6 | 52,7 | 37,5 | 9,5 | 1229 |
| 7 | 40,9 | 50,1 | 8,2 | 1644 |
| 8 | 39,7 | 44,1 | 7,9 | 1568 |
| 9 | 28,3 | 52,4 | 6,3 | 1937 |
| 10 | 32,7 | 51,0 | 6,1 | 1980 |
| 11 | 31,1 | 54,2 | 7,6 | 1921 |
| 12 | 32,5 | 48,6 | 7,3 | 1818 |
| 13 | 43,7 | 52,0 | 7,4 | 1939 |
| 14 | 42,4 | 42,3 | 6,2 | 1771 |
| 15 | 34,1 | 44,4 | 8,2 | 1678 |
| 16 | 42,0 | 44,0 | 8,7 | 1603 |
| 17 | 35,1 | 42,5 | 7,3 | 1654 |
| 18 | 40,8 | 38,9 | 7,0 | 1556 |
| 19 | 53,9 | 21,2 | 6,2 | 1078 |
| 20 | 40,5 | 45,5 | 7,8 | 1580 |
| 21 | 78,0 | 20,8 | 9,4 | 1007 |
| 22 | 46,0 | 21,4 | 5,3 | 1043 |
| 23 | 27,3 | 46,4 | 7,0 | 1697 |
| 24 | 13,5 | 18,9 | 11,9 | 979 |
| 25 | 11,9 | 17,6 | 12,3 | 989 |

Tableau 3: conditions des essais (technique au mouillé)

| essai No | $DP_c$ | $DP_f$ | $DS_f$ (%) | solvant type/% | additif type/% | formiate de cell. (%) | $T_F$ (°C) | $V_F$ (m/min) | $T_c$ (°C) | $V_{a1}$ (m/min) | $V_{a2}$ (m/min) | FEF total | $T_l$ (°C) |
|---|---|---|---|---|---|---|---|---|---|---|---|---|---|
| | | | | compositions de filage | | | filage | | | | | | |
| 1 | 550 | 420 | 41,5 | NMP/83,7 | - | 16,3 | 30 | 50 | 30 | 60 | 70 | 1,4 | 30 |
| 2 | 1400 | 960 | 38,3 | NMP/81,5 DMSO/10 | - | 8,5 | 20 | 25 | 20 | 30 | 30 | 1,2 | 20 |
| 3 | 550 | 480 | 39,0 | DMSO/91 | - | 9,0 | 30 | 75 | 30 | 40 | 60 | 0,8 | 50 |
| 4 | 550 | 480 | 39,0 | DMSO/91 | - | 9,0 | 30 | 53 | 30 | 48 | 48 | 0,9 | 50 |

EP 0 650 508 B1

Tableau 4:

| caractéristiques des fibres obtenues dans les conditions du tableau 3 | | | | |
|---|---|---|---|---|
| essai No | $T_i$ (tex) | T (cN/tex) | $A_R$ (%) | $M_i$ (cN/tex) |
| 1 | 55,7 | 14,3 | 8,7 | 888 |
| 2 | 11,2 | 15,4 | 12,2 | 843 |
| 3 | 10,3 | 15,9 | 6,7 | 937 |
| 4 | 8,7 | 11,4 | 14,3 | 636 |

Lors de la réalisation du formiate de cellulose, l'utilisation de l'acide formique et de l'acide orthophosphorique à 99 % permet d'obtenir un degré de substitution élévé, supérieur à 20 %, et une répartition homogène de ces groupes formiate, à la fois dans les zones amorphes et dans les zones cristallines de la cellulose.

D'autres procédés d'obtention du formiate de cellulose sont possibles, ces procédés étant de préférence réalisés en solution pour obtenir cette répartition homogène des groupes formiate.

La composition de filage réalisée constitue une solution dans tous les cas. Les additifs sont dissous dans cette solution en formant parfois des complexes avec le solvant.

Ces solutions, au repos, ne présentent aucune anisotropie aux températures de filage, elles sont donc isotropes à ces températures. Il peut arriver que certaines de ces solutions soient anisotropes, au repos, dans des plages particulières de températures, mais les températures de filage sont toujours prises en dehors de ces plages.

Lors du filage avec la technique de couche de fluide non coagulante (dry jet wet), et dans le cas d'un seul solvant pur sans additif (essais 16 et 17 du tableau 1), il est préférable d'avoir des concentrations en formiate de cellulose supérieures à 20 % en poids, car pour des concentrations inférieures un tel filage devient difficile. L'addition des sels, notamment le chlorure de calcium ou le chlorure de lithium, permet le filage par dry jet wet dans un domaine étendu de concentration de formiate, au dessus de 8 % en poids, que cette concentration soit inférieure ou supérieure à 20 %. Une telle addition est donc préférée pour la technique dry jet wet, sauf dans le cas où le solvant est un mélange de solvants purs sans additif (par exemple NMP + DMSO dans les exemples 15, 18, 19 du tableau 1).

Les fibres obtenues conformément à l'invention ont une morphologie très différente de la morphologie en couches obtenue avec des compositions anisotropes de filage, telle que décrite par exemple dans la demande WO-A-85/05115 précitée. En effet, les filaments élémentaires des fibres conformes à l'invention présentent, en section transversale, une morphologie pratiquement continue de la périphérie jusqu'au coeur.

On entend par ces termes, le fait que ces filaments élémentaires ne comportent pas une succession de nombreuses couches emboîtées les unes dans les autres, entourant l'axe de ces filaments. Lors d'un frottement entre elles, les fibres conformes à l'invention présentent donc une bien meilleure résistance à la fibrillation que les fibres décrites dans la demande WO-A-85/05115 précitée.

Le procédé conforme à l'invention présente les avantages suivants :

- il n'est pas polluant dans les conditions d'utilisation si on le compare aux procédés de viscose ou de rayonne ;

- il ne présente aucun danger, par exemple les risques d'explosions ne sont pas à craindre car il n'y a pas de formation de peroxyde ;

- il est économique, car il permet des vitesses de filage élevées, et des concentrations élevées en formiate de cellulose ;

- il peut être utilisé dans un domaine de concentration en formiate de cellulose très étendu et il peut donc être utilisé pour produire des fibres dont le titre et les propriétés mécaniques varient dans une large mesure ;

- le recyclage des liquides utilisés est facile.

La fibre conforme à l'invention présente les avantages suivants :

Les propriétés mécaniques (ténacité, module initial, allongement à la rupture) et le titre peuvent être modulés dans de larges limites, en jouant sur le degré de polymérisation de la cellulose et sur la concentration en formiate de cellulose dans la composition de filage. On peut ainsi, par exemple, obtenir une fibre technique, c'est-à-dire une fibre ayant une ténacité et un module initial élevés, dont les valeurs de ténacité et de module initial sont au moins aussi bonnes que celles de la rayonne.

Les caractéristiques préférentielles de la composition conforme à l'invention sont les suivantes :

- la teneur en eau et/ou en alcool(s) est inférieure à 10 % du poids du ou des solvants ;

- le DS de la cellulose en groupes formiate ($DS_f$) est supérieur à 30 %.

Dans le cas où la composition conforme à l'invention est destinée à la fabrication d'une fibre technique, elle a de préférence au moins une des caractéristiques suivantes :

- la composition contient un ou plusieurs composés choisis dans le groupe constitué par les halogénures de métaux alcalins, les halogénures de métaux alcalino-terreux, les halogénures de tétra-alkylammonium ;
- la concentration en formiate de cellulose est au moins égale à 18 %.

De façon encore plus préférentielle, la composition conforme à l'invention a au moins une des caractéristiques suivantes, dans le cas où elle est destinée à la fabrication d'une fibre technique :

- la composition contient du chlorure de calcium et/ou du chlorure de lithium ;
- la concentration en formiate de cellulose est au moins égale à 20 % ;
- le DP de la cellulose dans le formiate de cellulose est au moins égal à 600.

Le procédé conforme à l'invention est utilisé de préférence pour obtenir des fibres (procédé de filage) et il est mis en oeuvre de préférence avec une couche de fluide non coagulante (dry jet wet) qui est avantageusement une couche d'air.

De préférence, la fibre en cellulose régénérée conforme à l'invention a au moins une des caractéristiques suivantes :

- son degré de substitution en groupes formiate est inférieur à 2 % ;
- son allongement à la rupture $A_R$ est au moins égal à 8 %.

De préférence, la fibre en cellulose régénérée conforme à l'invention a au moins une des caractéristiques suivantes lorsqu'elle est une fibre technique :

- le DP est au moins égal à 500 ;
- la ténacité est au moins égale à 40 cN/tex ;
- le module initial est au moins égal à 1000 cN/tex.

De façon encore plus préférentielle, cette fibre technique a au moins une des caractéristiques suivantes :

- le DP est au moins égal à 600 ;
- la ténacité est au moins égale à 50 cN/tex ;
- le module initial est au moins égal à 1500 cN/tex.

Bien entendu, l'invention n'est pas limitée aux exemples de réalisation précédemment cités.

C'est ainsi que l'on peut utiliser d'autres solvants que ceux cités dans les exemples, notamment le N-méthylformamide, la N-formylmorpholine, l'ε-caprolactame, le δ-valérolactame, le N-méthylcaprolactame, le N-méthylvalérolactame, la γ-pyrrolidone, la 1,3-diméthyl-2-imidazolidinone, la 1,3-diméthyl-3,4,5,6-tétrahydro-2-pyrimidinone, le tétraméthylènesulfoxyde, et que l'on peut utiliser comme additifs des halogénures de tétra-alkylammonium, autres que ceux cités dans les exemples, notamment le chlorure de tétra-éthylammonium, le chlorure de tétrabutylammonium, le chlorure de tributylméthylammonium, le chlorure de tricaprylylméthylammonium.

D'autre part, les compositions conformes à l'invention peuvent comporter des additifs autres que ceux précédemment décrits.

Le terme "formiate de cellulose" couvre les cas où les groupes alcool de la cellulose sont substitués par d'autres groupes que les groupes formiate, en plus de ceux-ci, par exemple des groupes esters, notamment des groupes acétate, le degré de substitution de la cellulose en ces autres groupes étant de préférence inférieur à 10 %.

**Revendications**

1. Composition susceptible de donner des fibres ou des films, à base de formiate de cellulose, caractérisée par les points suivants :

   a) la composition est une solution ;

   b) la concentration en formiate de cellulose dans la composition est au moins égale à 8 % en poids ;

   c) le degré de substitution de la cellulose en groupes formiate est supérieur à 20 % ;

   d) la composition comporte comme solvant un ou plusieurs composés choisis dans le groupe constitué par les alkylsulfoxydes, les lactames, les amides acycliques, les dérivés cycliques de l'urée.

   e) le degré de polymérisation (DP) de la cellulose, dans le formiate de cellulose, est au moins égal à 500.

2. Composition selon la revendication 1, caractérisée en ce que sa teneur en eau et/ou en alcool(s) est inférieure à 10 % du poids du ou des solvants.

3. Composition selon l'une quelconque des revendications 1 ou 2, caractérisée en ce que le degré de substitution de la cellulose en groupes formiate est supérieur à 30 %.

4. Composition selon l'une quelconque des revendications 1 à 3, caractérisée en ce qu'elle contient un ou plusieurs composés choisis dans le groupe constitué par les halogénures de métaux alcalins, les halogénures de métaux alcalino-terreux, les halogénures de tétra-alkylammonium.

5. Composition selon l'une quelconque des revendications 1 à 4, caractérisée en ce que la concentration en formiate de cellulose est au moins égale à 18 %.

6. Composition selon l'une quelconque des revendications 4 ou 5, caractérisée en ce qu'elle contient du chlorure de calcium et/ou du chlorure de lithium.

7. Composition selon l'une quelconque des revendications 5 ou 6, caractérisée en ce que la concentration en formiate de cellulose est au moins égale à 20 %.

8. Composition selon l'une quelconque des revendications 1 à 7, caractérisée en ce que le DP est au moins égal à 600.

9. Procédé pour obtenir une fibre ou un film en cellulose régénérée comportant les étapes suivantes :

   a) on part d'une composition ayant les caractéristiques suivantes :

   - la composition est une solution ;

   - la concentration en formiate de cellulose dans la composition est au moins égale à 8 % en poids ;

   - le degré de substitution de la cellulose en groupes formiate est supérieur à 20 % ;

   - la composition comporte comme solvant un ou plusieurs composés choisis dans le groupe constitué par les alkylsulfoxydes, les lactames, les amides acycliques, les dérivés cycliques de l'urée.

   - le degré de polymérisation (DP) de la cellulose, dans le formiate de cellulose, est au moins égal à 500.

   b) on transforme la composition en un extrudat liquide ayant la forme d'une fibre ou d'un film, à une température telle que la solution est isotrope si elle est au repos ;

   c) on coagule ledit extrudat liquide ;

   d) on régénère la cellulose de la fibre ou du film ainsi obtenus ;

e) on lave et on sèche la fibre ou le film ainsi régénérés.

10. Procédé selon la revendication 9 caractérisé en ce que la teneur en eau et/ou en alcool(s) de la composition est inférieure à 10 % du poids du ou des solvants.

11. Procédé selon l'une quelconque des revendications 9 ou 10, caractérisé en ce que le degré de substitution de la cellulose en groupes formiate est supérieur à 30 %.

12. Procédé selon l'une quelconque des revendications 9 à 11, caractérisé en ce que la composition contient un ou plusieurs composés choisis dans le groupe constitué par les halogénures de métaux alcalins, les halogénures de métaux alcalino-terreux, les halogénures de tétra-alkylammonium.

13. Procédé selon l'une quelconque des revendications 9 à 12, caractérisée en ce que la concentration en formiate de cellulose est au moins égale à 18 %.

14. Procédé selon l'une quelconque des revendications 12 ou 13, caractérisée en ce que la composition contient du chlorure de calcium et/ou du chlorure de lithium.

15. Procédé selon l'une quelconque des revendications 13 ou 14, caractérisée en ce que la concentration en formiate de cellulose est au moins égale à 20 %.

16. Procédé selon l'une quelconque des revendications 9 à 15, caractérisée en ce que le DP est au moins égal à 600.

17. Procédé selon l'une quelconque des revendications 9 à 16, caractérisé en ce qu'il est mis en oeuvre pour obtenir une fibre selon la technique au mouillé.

18. Procédé selon l'une quelconque des revendications 9 à 16, caractérisé en ce qu'il est mis en oeuvre pour obtenir une fibre selon la technique utilisant une couche de fluide non coagulante.

19. Procédé selon la revendication 18, caractérisé en ce que la couche est une couche d'air.

20. Utilisation pour le filage de fibres ou de films d'une composition à base de formiate de cellulose, caractérisée par les points suivants :

   a) la composition est une solution ;

   b) la concentration en formiate de cellulose dans la composition est au moins égale à 8 % en poids ;

   c) le degré de substitution de la cellulose en groupes formiate est supérieur à 20 % ;

   d) la composition comporte comme solvant un ou plusieurs composés choisis dans le groupe constitué par les alkylsulfoxydes, les lactames, les amides acycliques, les dérivés cycliques de l'urée.

   e) le degré de polymérisation (DP) de la cellulose, dans le formiate de cellulose, est au moins égal à 500.

21. Utilisation selon la revendication 20, caractérisée en ce que la teneur en eau et/ou en alcool(s) de la composition est inférieure à 10 % du poids du ou des solvants.

22. Utilisation selon l'une quelconque des revendications 20 ou 21, caractérisée en ce que le degré de substitution de la cellulose en groupes formiate est supérieur à 30 %.

23. Utilisation selon l'une quelconque des revendications 20 à 22, caractérisée en ce que le degré de polymérisation de la cellulose, dans le formiate de cellulose, est au moins égal à 500.

24. Utilisation selon l'une quelconque des revendications 20 à 23, caractérisée en ce que la composition contient un ou plusieurs composés choisis dans le groupe constitué par les halogénures de métaux alcalins, les halogénures de métaux alcalino-terreux, les halogénures de tétra-alkylammonium.

**25.** Utilisation selon l'une quelconque des revendications 20 à 24, caractérisée en ce que la concentration en formiate de cellulose est au moins égale à 18 %.

**26.** Utilisation selon l'une quelconque des revendications 24 ou 25, caractérisée en ce que la composition contient du chlorure de calcium et/ou du chlorure de lithium.

**27.** Fibre en cellulose régénérée caractérisée par les points suivants :

a) le degré de substitution de la cellulose en groupes formiate est inférieur à 3 % ;

b) la fibre est constituée de filaments qui ont chacun, en section transversale, une morphologie pratiquement continue de la périphérie jusqu'au coeur ;

c) les caractéristiques mécaniques de la fibre conditionnée sont les suivantes :

$T \geq 10$ cN/tex ; $M_i \geq 500$ cN/tex ; $A_R > 5$ % ;
$T$ étant la ténacité, $M_i$ étant le module initial, et $A_R$ étant l'allongement à la rupture.

**28.** Fibre selon la revendication 27, caractérisée en ce qu'elle vérifie au moins une des caractéristiques suivantes :

- son degré de substitution en groupes formiate est inférieur à 2 % ;

- $A_R \geq 8\%$.

**29.** Fibre selon l'une quelconque des revendications 27 ou 28, caractérisée en ce que le degré de polymérisation (DP) de la cellulose est au moins égal à 500.

**30.** Fibre selon l'une quelconque des revendications 27 à 29, caractérisée en Ce qu'elle vérifie au moins l'une des caractéristiques suivantes :

- $T$ est au moins égale à 40 cN/tex ;
- $M_i$ est au moins égal à 1000 cN/tex.

**31.** Fibre selon l'une quelconque des revendications 29 ou 30, caractérisée en ce que le DP est au moins égal à 600.

**32.** Fibre selon l'une quelconque des revendications 30 ou 31, caractérisée en ce qu'elle a au moins une des caratéristiques suivantes :

- $T$ est au moins égale à 50 cN/tex ;
- $M_i$ est au moins égal à 1500 cN/tex.

**33.** Fibre obtenue selon le procédé conforme à l'une quelconque des revendications 9 à 19.

**34.** Film obtenu selon le procédé conforme à la revendication 9.

**35.** Assemblage comportant au moins une fibre et/ou un film selon l'une quelconque des revendications 27 à 34.

**36.** Article renforcé par au moins une fibre et/ou un film selon l'une quelconque des revendications 27 à 34, et/ou par au moins un assemblage selon la revendication 35.

**37.** Article selon la revendication 36, caractérisé en ce qu'il est une enveloppe de pneumatique.

**Patentansprüche**

**1.** Zusammensetzung auf der Basis von Celluloseformiat, aus der Fasern oder Folien hergestellt werden können, gekennzeichnet durch folgende Punkte:

a) Die Zusammensetzung ist eine Lösung.
b) Die Konzentration von Celluloseformiat in der Zusammensetzung beträgt mindestens 8 Gew.-%.
c) Der Grad der Substitution der Cellulose mit Formiatgruppen liegt über 20 %.
d) Die Zusammensetzung enthält als Lösemittel eine oder mehrere Verbindungen, die unter Alkylsulfoxiden, Lactamen, acyclischen Amiden und cyclischen Harnstoffderivaten ausgewählt sind.
e) Der Polymerisationsgrad (PG) der Cellulose in dem Celluloseformiat beträgt mindestens 500.

2. Zusammensetzung nach Anspruch 1, dadurch gekennzeichnet, daß der Gehalt an Wasser und/oder Alkohol(en) unter 10 % des Gewichts des Lösemittels oder der Lösemittel liegt.

3. Zusammensetzung nach einem der Ansprüche 1 oder 2, dadurch gekennzeichnet, daß der Grad der Substitution der Cellulose mit Formiatgruppen über 30 % beträgt.

4. Zusammensetzung nach einem der Ansprüche 1 bis 3, dadurch gekennzeichnet, daß sie eine oder mehrere Verbindungen enthält, die ausgewählt sind unter Alkalimetallhalogeniden, Erdalkalimetallhalogeniden und Tetraalkylammoniumhalogeniden.

5. Zusammensetzung nach einem der Ansprüche 1 bis 4, dadurch gekennzeichnet, daß die Konzentration von Celluloseformiat mindestens 18 % beträgt.

6. Zusammensetzung nach einem der Ansprüche 4 oder 5, dadurch gekennzeichnet, daß sie Calciumchlorid und/oder Lithiumchlorid enthält.

7. Zusammensetzung nach einem der Ansprüche 5 oder 6, dadurch gekennzeichnet, daß die Konzentration von Celluloseformiat mindestens 20 % beträgt.

8. Zusammensetzung nach einem der Ansprüche 1 bis 7, dadurch gekennzeichnet, daß der PG mindestens 600 ist.

9. Verfahren zur Herstellung einer Faser oder einer Folie aus Regeneratcellulose, das folgende Schritte aufweist:

a) Es wird von einer Zusammensetzung mit folgenden Eigenschaften ausgegangen:

- Die Zusammensetzung ist eine Lösung.
- Die Konzentration von Celluloseformiat in der Zusammensetzung beträgt mindestens 8 Gew.-%.
- Der Grad der Substitution der Cellulose mit Formiatgruppen liegt über 20 %.
- Die Zusammensetzung enthält als Lösemittel eine oder mehrere Verbindungen, die unter Alkylsulfoxiden, Lactamen, acyclischen Amiden und cyclischen Harnstoffderivaten ausgewählt sind.
- Der Polymerisationsgrad (PG) der Cellulose in dem Celluloseformiat beträgt mindestens 500.

b) Die Zusammensetzung wird in ein flüssiges Extrudat umgewandelt, das die Form einer Faser oder einer Folie aufweist, wobei die Umwandlung bei einer Temperatur erfolgt, die so ist, daß die Lösung wenn im Ruhezustand isotrop ist.
c) Das flüssige Extrudat wird koagulieren gelassen.
d) Die Cellulose der so erhaltenen Faser oder der so erhaltenen Folie wird regeneriert.
e) Die so regenerierte Faser oder die so regenerierte Folie wird gewaschen und getrocknet.

10. Verfahren nach Anspruch 9, dadurch gekennzeichnet, daß der Gehalt der Zusammensetzung an Wasser und/oder Alkohol(en) unter 10 % des Gewichts des Lösemittels oder der Lösemittel liegt.

11. Verfahren nach einem der Ansprüche 9 oder 10, dadurch gekennzeichnet, daß der Grad der Substitution der Cellulose mit Formiatgruppen über 30 % beträgt.

12. Verfahren nach einem der Ansprüche 9 bis 11, dadurch gekennzeichnet, daß die Zusammensetzung eine oder mehrere Verbindungen enthält, die unter Alkalimetallhalogeniden, Erdalkalimetallhalogeniden und Tetraalkylammoniumhalogeniden ausgewählt sind.

13. Verfahren nach einem der Ansprüche 9 bis 12, dadurch gekennzeichnet, daß die Konzentration von Celluloseformiat mindestens 18 % beträgt.

**14.** Verfahren nach einem der Ansprüche 12 oder 13, dadurch gekennzeichnet, daß die Zusammensetzung Calciumchlorid und/oder Lithiumchlorid enthält.

**15.** Verfahren nach einem der Ansprüche 13 oder 14, dadurch gekennzeichnet, daß die Konzentration von Celluloseformiat mindestens 20 % beträgt.

**16.** Verfahren nach einem der Ansprüche 9 bis 15, dadurch gekennzeichnet, daß der PG mindestens 600 ist.

**17.** Verfahren nach einem der Ansprüche 9 bis 16, dadurch gekennzeichnet, daß es zur Herstellung einer Faser nach dem Naßspinnverfahren angewandt wird.

**18.** Verfahren nach einem der Ansprüche 9 bis 16, dadurch gekennzeichnet, daß es zur Herstellung einer Faser nach dem Verfahren unter Verwendung einer nicht koagulierend wirkenden Wirbelschicht angewandt wird.

**19.** Verfahren nach Anspruch 18, dadurch gekennzeichnet, daß es sich bei der Schicht um eine Luftschicht handelt.

**20.** Verwendung einer Zusammensetzung auf der Basis von Celluloseformiat zum Spinnen von Fasern oder Folien, gekennzeichnet durch folgende Punkte:

a) Die Zusammensetzung ist eine Lösung.
b) Die Konzentration von Celluloseformiat in der Zusammensetzung beträgt mindestens 8 Gew.-%.
c) Der Grad der Substitution der Cellulose mit Formiatgruppen liegt über 20 %.
d) Die Zusammensetzung enthält als Lösemittel eine oder mehrere Verbindungen, die unter Alkylsulfoxiden, Lactamen, acyclischen Amiden und cyclischen Harnstoffderivaten ausgewählt sind.
e) Der Polymerisationsgrad (PG) der Cellulose in dem Celluloseformiat beträgt mindestens 500.

**21.** Verwendung nach Anspruch 20, dadurch gekennzeichnet, daß der Gehalt der Zusammensetzung an Wasser und/oder Alkohol(en) unter 10 % des Gewichts des Lösemittels oder der Lösemittel liegt.

**22.** Verwendung nach einem der Ansprüche 20 oder 21, dadurch gekennzeichnet, daß der Grad der Substitution der Cellulose mit Formiatgruppen über 30 % beträgt.

**23.** Verwendung nach einem der Ansprüche 20 bis 22, dadurch gekennzeichnet, daß der Polymerisationsgrad der Cellulose in dem Celluloseformiat mindestens 500 ist.

**24.** Verwendung nach einem der Ansprüche 20 bis 23, dadurch gekennzeichnet, daß die Zusammensetzung eine oder mehrere Verbindungen enthält, die ausgewählt sind unter Alkalimetallhalogeniden, Erdalkalimetallhalogeniden und Tetraalkylammoniumhalogeniden.

**25.** Verwendung nach einem der Ansprüche 20 bis 24, dadurch gekennzeichnet, daß die Konzentration von Celluloseformiat mindestens 18 % beträgt.

**26.** Verwendung nach einem der Ansprüche 24 oder 25, dadurch gekennzeichnet, daß die Zusammensetzung Calciumchlorid und/oder Lithiumchlorid enthält.

**27.** Faser aus Regeneratcellulose, gekennzeichnet durch folgende Punkte:

a) Der Grad der Substitution der Cellulose mit Formiatgruppen liegt unter 3 %.
b) Die Faser besteht aus Filamenten, die jeweils im Querschnitt von außen bis in die Mitte eine praktisch kontinuierliche Morphologie aufweisen.
c) Die konditionierte Faser weist folgende mechanische Eigenschaften auf:

$F \geq 10$ cN/tex ; $M_A \geq 500$ cN/tex ; $D_B > 5$ % ,
wobei F die Festigkeit, $M_A$ den Anfangsmodul und $D_B$ die Bruchdehnung bedeuten.

**28.** Faser nach Anspruch 27, dadurch gekennzeichnet, daß sie mindestens eines der folgenden Merkmale erfüllt:

- Der Grad der Substitution mit Formiatgruppen liegt unter 2 %.

- $D_B \geq 8\%$.

29. Faser nach einem der Ansprüche 27 oder 28, dadurch gekennzeichnet, daß der Polymerisationsgrad (PG) der Cellulose mindestens 500 ist.

30. Faser nach einem der Ansprüche 27 bis 29, dadurch gekennzeichnet, daß sie mindestens eines der folgenden Merkmale erfüllt:

- F beträgt mindestens 40 cN/tex.
- $M_A$ ist mindestens 1000 cN/tex.

31. Faser nach einem der Ansprüche 29 oder 30, dadurch gekennzeichnet, daß der PG mindestens 600 ist.

32. Faser nach einem der Ansprüche 30 oder 31, dadurch gekennzeichnet, daß sie mindestens eine der folgenden Eigenschaften aufweist:

- F beträgt mindestens 50 cN/tex.
- $M_A$ ist mindestens 1500 cN/tex.

33. Faser, die nach dem Verfahren nach einem der Ansprüche 9 bis 19 hergestellt ist.

34. Folie, die nach dem Verfahren nach Anspruch 9 hergestellt ist.

35. Anordnung, das mindestens eine Faser und/oder eine Folie nach einem der Ansprüche 27 bis 34 aufweist.

36. Artikel, der mit mindestens einer Faser und/oder einer Folie nach einem der Ansprüche 27 bis 34 und/oder mit mindestens einem gefertigten Produkt nach Anspruch 35 verstärkt ist.

37. Artikel nach Anspruch 36, dadurch gekennzeichnet, daß es sich um einen Reifenmantel handelt.


**Claims**

1. A composition capable of giving fibres or films having a base of cellulose formate, characterised by the following features:

   a) the composition is a solution;

   b) the concentration of cellulose formate in the composition is at least equal to 8% by weight;

   c) the degree of substitution of the cellulose by formate groups is greater than 20%;

   d) the composition contains as solvent one or more compounds selected from the group consisting of alkylsulphoxides, lactams, acyclic amides and cyclic derivatives of urea;

   e) the degree of polymerisation (DP) of the cellulose in the cellulose formate is at least equal to 500.

2. A composition according to Claim 1, characterised in that its content of water and/or of alcohol or alcohols is less than 10% by weight of the solvent or solvents.

3. A composition according to any one of Claims 1 or 2, characterised in that the degree of substitution of the cellulose by formate groups is greater than 30%.

4. A composition according to any one of Claims 1 to 3, characterised in that it contains one or more compounds selected from the group consisting of alkali-metal halides, alkaline-earth metal halides and tetraalkylammonium halides.

5. A composition according to any one of Claims 1 to 4, characterised in that the concentration of cellulose formate is at least equal to 18%.

6. A composition according to any one of Claims 4 or 5, characterised in that it contains calcium chloride and/or lithium chloride.

7. A composition according to any one of Claims 5 or 6, characterised in that the concentration of cellulose formate is at least equal to 20%.

8. A composition according to any one of Claims 1 to 7, characterised in that the DP is at least equal to 600.

9. A process for obtaining a fibre or a film of regenerated cellulose, comprising the following steps:

   a) the starting point is a composition having the following characteristics:

   - the composition is a solution;
   - the concentration of cellulose formate in the composition is at least equal to 8% by weight;
   - the degree of substitution of the cellulose by formate groups is greater than 20%;
   - the composition contains as solvent one or more compounds selected from the group consisting of alkylsulphoxides, lactams, acyclic amides and cyclic derivatives of urea;
   - the degree of polymerisation (DP) of the cellulose in the cellulose formate is at least equal to 500.

   b) the composition is transformed into a liquid extrudate having the shape of a fibre or film, at a temperature such that the solution is isotropic when at rest;

   c) said liquid extrudate is coagulated;

   d) the cellulose of the fibre or film thus obtained is regenerated;

   e) the fibre or film which has thus been regenerated is washed and dried.

10. A process according to Claim 9, characterised in that the content of water and/or of alcohol or alcohols of the composition is less than 10% by weight of the solvent or solvents.

11. A process according to any one of Claims 9 or 10, characterised in that the degree of substitution of the cellulose by formate groups is greater than 30%.

12. A process according to any one of Claims 9 to 11, characterised in that the composition contains one or more compounds selected from the group consisting of alkali-metal halides, alkaline-earth metal halides and tetraalkylammonium halides.

13. A process according to any one of Claims 9 to 12, characterised in that the concentration of cellulose formate is at least equal to 18%.

14. A process according to any one of Claims 12 or 13, characterised in that the composition contains calcium chloride and/or lithium chloride.

15. A process according to any one of Claims 13 or 14, characterised in that the concentration of cellulose formate is at least equal to 20%.

16. A process according to any one of Claims 9 to 15, characterised in that the DP is at least equal to 600.

17. A process according to any one of Claims 9 to 16, characterised in that it is used to obtain a fibre in accordance with the wet technique.

18. A process according to any one of Claims 9 to 16, characterised in that it is used to obtain a fibre according to the technique using a non-coagulating layer of fluid.

19. A process according to Claim 18, characterised in that the layer is a layer of air.

**20.** The use, for the spinning of fibres or films, of a composition having a base of cellulose formate, characterised by the following features:

a) the composition is a solution;

b) the concentration of cellulose formate in the composition is at least equal to 8% by weight;

c) the degree of substitution of the cellulose by formate groups is greater than 20%;

d) the composition contains as solvent one or more compounds selected from the group consisting of alkylsulphoxides, lactams, acyclic amides and cyclic derivatives of urea;

e) the degree of polymerisation (DP) of the cellulose in the cellulose formate is at least equal to 500.

**21.** The use according to Claim 20, characterised in that the content of water and/or of alcohol or alcohols of the composition is less than 10% by weight of the solvent or solvents.

**22.** The use according to any one of Claims 20 or 21, characterised in that the degree of substitution of the cellulose by formate groups is greater than 30%.

**23.** The use according to any one of Claims 20 to 22, characterised in that the degree of polymerisation (DP) of the cellulose in the cellulose formate is at least equal to 500.

**24.** The use according to any one of Claims 20 to 23, characterised in that the composition contains one or more compounds selected from the group consisting of alkali-metal halides, alkaline-earth metal halides and tetraalkylammonium halides.

**25.** The use according to any one of Claims 20 to 24, characterised in that the concentration of cellulose formate is at least equal to 18%.

**26.** The use according to any one of Claims 24 or 25, characterised in that the composition contains calcium chloride and/or lithium chloride.

**27.** A regenerated cellulose fibre, characterised by the following features:

a) the degree of substitution of the cellulose by formate groups is less than 3%;

b) the fibre is formed of filaments each of which has, in cross-section, a morphology which is practically continuous from the periphery up to the core;

c) the mechanical properties of the conditioned fibre are as follows:

$T \geq 10$ cN/tex; $M_i \geq 500$ cN/tex; $A_R > 5\%$;
T being the tenacity, $M_i$ being the initial modulus $A_R$ and being the elongation upon rupture.

**28.** A fibre according to Claim 27, characterised in that it meets at least one of the following characteristics:

- its degree of substitution by formate groups is less than 2%;

- $A_R \geq 8\%$.

**29.** A fibre according to any one of Claims 27 or 28, characterised in that the degree of polymerisation (DP) of the cellulose is at least equal to 500.

**30.** A fibre according to any one of Claims 27 to 29, characterised in that it meets at least one of the following characteristics:

- T is at least equal to 40 cN/tex;

    -     $M_i$ is at least equal to 1000 cN/tex.

31. A fibre according to any one of Claims 29 or 30, characterised in that the DP is at least equal to 600.

32. A fibre according to any one of Claims 30 or 31, characterised in that it has at least one of the following characteristics:

    -     T is at least equal to 50 cN/tex;
    -     $M_i$ is at least equal to 1500 cN/tex.

33. A fibre obtained in accordance with the process according to any one of Claims 9 to 19.

34. A film obtained in accordance with the process according to Claim 9.

35. An assembly comprising at least one fibre and/or one film according to any of Claims 27 to 34.

36. An article reinforced by at least one fibre and/or one film according to any one of Claims 27 to 34, and/or by at least one assembly according to Claim 35.

37. An article according to Claim 36, characterised in that it is a tyre.